# EUROPÄISCHE PATENTSCHRIFT

(11) **EP 2 324 595 B1**
(45) Veröffentlichungstag und Bekanntmachung des Hinweises auf die Patenterteilung: **28.09.2016**
(21) Anmeldenummer: 09781973.4
(22) Anmeldetag: 19.08.2009
(51) Int. Cl.: H04L 9/08, H04L 9/32, H04L 29/06, H04W 12/02, H04W 12/10, H04W 12/12, H04W 84/18

(54) **VERFAHREN ZUR DATENÜBERTRAGUNG ZWISCHEN NETZWERKKNOTEN**
METHOD FOR DATA TRANSMISSION BETWEEN NETWORK NODES
PROCÉDÉ POUR LA TRANSMISSION DE DONNÉES ENTRE LES NOEUX D'UN RÉSEAU

(30) Priorität: 10.09.2008 DE 102008046563
(43) Veröffentlichungstag der Anmeldung: 25.05.2011
(73) Patentinhaber: Siemens Aktiengesellschaft, 80333 München (DE)
(72) Erfinder: FALK, Rainer, 85435 Erding (DE); HOF, Hans-Joachim, 80337 München (DE); MEYER, Ulrike, 52070 Aachen (DE)
(86) Internationale Anmeldenummer: PCT/EP2009/060700
(87) Internationale Veröffentlichungsnummer: WO 2010/028936

(56) Entgegenhaltungen:
- WO-A2-2008/011376
- US-A1- 2008 044 014
- YANG XIAO ET AL: "Security services and enhancements in the IEEE 802.15.4 wireless sensor networks" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, Bd. 3, 28. November 2005 (2005-11-28), Seiten 1796-1800, XP010880366 ISBN: 978-0-7803-9414-8

## Beschreibung

Die Erfindung betrifft ein Verfahren zur kryptographisch geschützten Übertragung von Daten zwischen Netzwerkknoten eines Netzwerkes, insbesondere eines drahtlosen Sensornetzwerkes.

Drahtlose Sensornetzwerke oder Sensoraktornetze WSN (Wireless Sensor Networks) sind vielseitig einsetzbar. Beispielsweise werden drahtlose Sensornetzwerke zur Überwachung und Steuerung von Fertigungsanlagen, zur Überwachung und Steuerung von chemischen Prozessen sowie zur Überwachung von Pipelines eingesetzt. In drahtlosen Sensornetzen kommunizieren die Sensorknoten des Netzwerkes drahtlos über eine Funkschnittstelle. Die Datenübertragung erfolgt gemäß einem Datenübertragungsprotokoll. Bekannte Datenübertragungsprotokolle zur Datenübertragung über eine Funkschnittstelle sind das Protokoll 802.15.4, Zig Bee, Wireless HART sowie Bluetooth. Mittels Nachrichten werden zwischen den Sensorknoten Messwerte und Steuerkommandos ausgetauscht.

Um eine Manipulation der drahtlos übertragenen Nachrichten durch unbefugte Dritte zu verhindern, werden die zwischen den Knoten des Netzwerks ausgetauschten Daten kryptographisch geschützt. Aufgrund der eingeschränkten Leistungsfähigkeit von Netzwerkknoten, insbesondere in drahtlosen Sensornetzwerken, hinsichtlich Speicherplatz und Rechenleistung und aufgrund der begrenzten Energieressourcen, insbesondere bei einem Batteriebetrieb der Knoten, besteht daher ein Bedarf nach einer effizienten Sicherheitslösung.

Zur Sicherung der übertragenen Daten werden diese herkömmlicherweise mit einem Schlüssel verschlüsselt. Allerdings ist die einfache Verschlüsselung K nicht ganz sicher, da für einen Dritten die Möglichkeit besteht, Nachrichten in sogenannten "Replay-Attacken" wiedereinzuspiegeln. Es werden daher in konventionellen Netzwerken sogenannte NONCE-Werte eingesetzt.

Ein NONCE-Wert stellt einen Einmal-Wert bzw. einen nur einmalig zu verwendenden Wert dar. Der NONCE-Wert dient zur Erkennung von wieder eingespielten Nachrichten (Replay-Attacken). Die Verschlüsselung der Daten, beispielsweise von Messdaten seitens eines Sendeknotens, beispielsweise eines Sensorknotens, erfolgt dann in Abhängigkeit von einem Schlüssel K und einem NONCE-Wert. Dieser NONCE-Wert wird auch als Initialisierungsvektor bezeichnet. Der Sendeknoten sendet eine Nachricht bzw. einen Frame F an einen Empfangsknoten innerhalb des Netzwerkes. Jeder NONCE-Wert wird in Verbindung mit jedem Schlüssel nur einmal verwendet. Um einen wirksamen Schutz gegen Wiedereinspielen von Nachrichten bzw. Replay-Attacken zu erreichen wird daher auf Seiten des Empfangsknotens die Einmaligkeit des in der empfangenen Nachricht verwendeten NONCE-Wertes überprüft. Oft verwendete kryptographische Verfahren zum Schutz von Datenframes, z.B. bei 802.15.4 oder WLAN, erfordern weiterhin, dass ein NONCE-Wert bzw. ein Initialisierungsvektor mit jedem Schlüssel nur einmal verwendet werden darf. Ansonsten würde der kryptographischen Schutz geschwächt werden. Spätestens wenn der Wertebereich für NONCE-Werte erschöpft ist, muss daher ein neuer Schlüssel K' eingerichtet werden (Re-Keying).

Aus der US 2008/0044014 A1 ist Verfahren zur kryptographisch geschützten Übertragung von Daten zwischen Netzwerkknoten eines Netzwerkes bekannt, bei dem ein NONCE-Wert aus einem Zählwert, welcher bei der Übertragung der Nachricht aktualisiert wird und aus einem Konstantwert, welcher bevorzugt dauerhaft auf logisch Null gesetzt wird, gebildet wird.

Bei einer Verwendung von NONCE-Werten zum Schutz gegen Replay-Attacken ist es allerdings notwendig, dass auf der Empfängerseite, das heißt auf Seiten eines Empfangsknotens Zustandsinformationen über bereits verwendete NONCE-Werte gespeichert werden. Da ein Netzwerk aus einer Vielzahl von Knoten bestehen kann und jeder Knoten für jeden anderen Knoten des Netzwerkes, von dem er potenziell eine Nachricht bzw. ein Frame empfangen kann, eine zugehörige Zustandsinformation über die von den jeweiligen Knoten bereits verwendeten NONCE-Werte speichern muss, führt dies zu einer hohen Ressourcenbelastung aufgrund des benötigten Speicherplatzes zum Abspeichern der Zustandsinformationen. Ein hoher Speicherbedarf in jedem Knoten besteht insbesondere dann, wenn viele Ende-zuEnde-Sicherheitsbeziehungen zwischen den verschiedenen Knoten des Netzwerkes bestehen und da für jede Ende-zu-Ende-Sicherheitsbeziehung in dem Knoten ein NONCE-Wert gespeichert werden muss.

Es ist daher eine Aufgabe der vorliegenden Erfindung ein Verfahren zur kryptographisch geschützten Übertragung von Daten zwischen Netzwerkknoten eines Netzwerks zu schaffen, bei dem der benötigte Speicherplatz zum Speichern von Zustandsinformationen für NONCE-Werte gering ist.

Diese Aufgabe wird durch ein Verfahren zum kryptographisch geschützten Übertragen von Daten zwischen Netzwerkknoten eines Netzwerkes mit den im Patentanspruch 1 angegebenen Merkmalen gelöst.

Die Erfindung schafft ein Verfahren zum kryptographisch geschützten Übertragen von Daten zwischen Netzwerkknoten eines Netzwerks, wobei zur Übertragung der Daten in einer Nachricht die folgenden Schritte ausgeführt werden:
- a): Bilden eines NONCE-Wertes, aus einem Zählwert, welcher bei der Übertragung der Nachricht aktualisiert wird, und aus einem Konstantwert, welcher von einem zentralen Management-Netzwerkknoten den übrigen Netzwerkknoten des Netzwerkes gemeinsam zur Verfügung gestellt wird; und
- b): Ver- und Entschlüsseln der in der Nachricht übertragenen Daten mittels eines kryptographischen Schlüssels und des gebildeten NONCE-Wertes.

Dies bietet den Vorteil, dass der netzwerkweit eingesetzte Konstantwert in einfacher Weise verwaltet und gegebenenfalls ohne großen Aufwand ausgetauscht werden kann, um die Sicherheit des Netzwerks gegen Manipulationen zu erhöhen. Der netzwerkweit eingesetzte Konstantwert muss auf einem Netwerkknoten nur einmal gespeichert werden unabhängig von der Anzahl der Netzwerkknoten. Weiterhin ist es nicht erforderlich, dass ein Netzwerkknoten einen Zählerwert dauerhaft speichert, also auch z.B. bei Abklemmen der Stromversorgung oder bei einem Batteriewechsel, um zu verhindern, dass der gleiche Nonce-Wert durch diesen Netzwerkknoten mehrmals verwendet wird, da nach Anlegen der Stromversorgung an den Netzwerkknoten und Aufnahme des Betriebs ihm ein aktueller netzwerkweit eingesetzte Konstantwert zugewiesen werden kann.

Bei einer Ausführungsform des erfindungsgemäßen Verfahrens wird der NONCE-Wert zusätzlich in Abhängigkeit von einer Sendeknotenadresse desjenigen Sendenetzwerkknotens gebildet, der die Nachricht zu einem Empfangsnetzwerkknoten des Netzwerks überträgt.

Hierdurch wird die Sicherheit gegenüber Replay-Attacken weiter gesteigert.

Bei einer Ausführungsform des erfindungsgemäßen Verfahrens wird der gemeinsame Konstantwert von dem zentralen Management-Netzwerkknoten durch Aussenden einer Broadcast-Nachricht oder durch Aussenden von Unicast-Nachrichten an die Netzwerkknoten des Netzwerks übertragen.

Dadurch kann der gemeinsame, netzwerkweit eingesetzte Konstantwert in einfacher und schneller Weise aktualisiert werden.

Bei einer weiteren Ausführungsform des erfindungsgemäßen Verfahrens ist der gemeinsame Konstantwert von dem zentralen Management-Netzwerkknoten umkonfigurierbar.

Diese Umkonfiguration des gemeinsamen Konstantwertes erfolgt bei einer möglichen Ausführungsform in festen, regelmäßigen Zeitabständen.

Bei einer alternativen Ausführungsform erfolgt die Umkonfiguration des gemeinsamen Konstantwertes, der zur Bildung eines NONCE-Wetes verwendet wird, nach Überschreiten einer vorgegebenen übertragenen Datenmenge.

Bei einer weiteren Ausführungsform des erfindungsgemäßen Verfahrens erfolgt die Umkonfiguration des gemeinsamen Konstantwertes nach einem Überschreiten einer vorgegebenen Anzahl von übertragenen Nachrichten.

Bei einer weiteren Ausführungsform des erfindungsgemäßen Verfahrens erfolgt die Umkonfiguration des gemeinsamen Konstantwertes nach Erreichen eines vorgegebenen Zählerwertes bei einem der Netzwerkknoten des Netzwerkes.

Bei einer weiteren Ausführungsform des erfindungsgemäßen Verfahrens erfolgt die Umkonfiguration des gemeinsamen Konstantwertes bei Eintritt eines vorgegebenen Ereignisses.

Bei einer weiteren Ausführungsform des erfindungsgemäßen Verfahrens ist das vorgegebene Ereignis die Aufnahme eines zusätzlichen Netzwerkknotens in das Netzwerk, beispielsweise wenn sich ein Netzwerkknoten nach Anschließen einer Versorgungsspannung eine Kommunikation mit dem Netzwerk aufnimmt.

Bei einer weiteren Ausführungsform des erfindungsgemäßen Verfahrens erfolgt die Umkonfiguration des gemeinsamen Konstantwertes bei einer Übertragung von Daten, die eine vorgegebene Bedingung erfüllen.

Die verschiedenen Ausführungsformen zur Umkonfiguration des gemeinsamen Konstantwertes erlauben es das erfindungsgemäße Verfahren zur kryptographisch geschützten Übertragung von Daten zwischen Netzwerkknoten eines Netzwerks für die verschiedensten Anwendungen flexibel einzusetzen und den verschiedenen Sicherheitsbedürfnissen zu genügen.

Bei einer weiteren Ausführungsform des erfindungsgemäßen Verfahrens wird der NONCE-Wert durch Konkatenation bzw. Verkettung der Sendeknotenadresse des sendenden Netzwerkknotens, des gemeinsamen Konstantwertes und eines Zählwertes, der von einem internen Zähler des sendenden Netzwerkknotens erzeugt wird, gebildet.

Diese Ausführungsform bietet den Vorteil, dass der NONCE-Wert mit einem relativ geringen schaltungstechnischen Aufwand bei gleichzeitig geringem Strom bzw. Energieverbrauch gebildet werden kann.

Bei einer weiteren Ausführungsform des erfindungsgemäßen Verfahrens wird der NONCE-Wert durch eine Hash-Funktion der Konkatenation der Sendeknotenadresse des sendenden Netzwerkknotens, des gemeinsamen Konstantwerts und des Zählwertes, der von einem internen Zählers des sendenden Netzwerkknotens erzeugt wird, gebildet.

Diese Ausführungsform bildet den Vorteil, dass ein Dritter, selbst beim Abhören einer übertragenen Nachricht nicht den von dem Sendenetzwerkknoten aktuell verwendeten NONCE-Wert erkennen kann, so dass die Sicherheit gegenüber Manipulationen erhöht wird.

Bei einer weiteren Ausführungsform des erfindungsgemäßen Verfahrens erfolgt das Verschlüsseln und Entschlüsseln der in der Nachricht übertragenen Daten durch einen CCM-Algorithmus.

Bei einer möglichen Ausführungsform des Verfahrens weist die übertragenen Nachricht Header-Daten auf, welche eine Sendeknotenadresse, eine Empfangsknotenadresse und den aktuellen Zählwert des Sendenetzwerkknotens umfassen, sowie Nutzdaten, welche die verschlüsselten Daten enthalten.

Bei einer weiteren Ausführungsform des erfindungsgemäßen Verfahrens vergleicht der Empfangsnetzwerkknoten den in der Nachricht übertragenen Zählwert des Sendenetzwerkknotens mit einem anhand der in der Nachricht übertragenen Sendeknotenadresse selektierten Zählwert eines internen Zählers des Empfangsnetzwerkknotens und bildet aus dem übertragenen Zählwert, aus dem gemeinsamen Konstantwert und aus der übertragenen Sendeknotenadresse einen empfangsseitigen NONCE-Wert, falls der übertragene Zählwert aktueller ist als der selektierte Zählwert, wobei der empfangsseitig gebildete NONCE-Wert und ein in dem Empfangsnetzwerkknoten gespeicherter Schlüssel zur Entschlüsselung der in der Nachricht verschlüsselt übertragenen Daten benutzt werden.

Bei einer weiteren Ausführungsform des erfindungsgemäßen Verfahrens wird die Nachricht über eine Funkschnittstelle von dem Sendenetzwerkknoten zu dem Empfangsnetzwerkknoten übertragen.

Die Erfindung schafft ferner ein Netzwerk, bestehend aus mehreren Netzwerkknoten, die untereinander Daten in Nachrichten übertragen, wobei jeder Netzwerkknoten aufweist:
- a): eine Einheit zum Bilden eines NONCE-Wertes, aus einem Zählwert, welcher bei der Übertragung einer Nachricht aktualisiert wird, und aus einem Konstantwert, welcher den Netzwerkknoten des Netzwerkes gemeinsam zur Verfügung gestellt wird; und
- b): eine Einheit zur Ver- und Entschlüsselung der in der Nachricht übertragenen Daten mittels eines kryptographischen Schlüssels und des gebildeten NONCE-Wertes.

Bei einer Ausführungsform des erfindungsgemäßen Netzwerks weist das Netzwerk einen zentralen Management-Netzwerkknoten auf, der den gemeinsamen Konstantwert den übrigen Netzwerkknoten des Netzwerks zur Verfügung stellt.

Bei einer Ausführungsform des erfindungsgemäßen Netzwerks weist jeder Netzwerkknoten jeweils mindestens einen Sensor auf.

Die Erfindung schafft ferner ein Computerprogramm mit Programmbefehlen zur Durchführung eines Verfahrens zum kryptographisch geschützten Übertragen von Daten zwischen Netzwerkknoten eines Netzwerks, wobei zur Übertragung der Daten in eine Nachricht die folgenden Schritte ausgeführt werden:
- a): Bilden eines NONCE-Wertes, aus einem Zählwert, welcher bei der Übertragung der Nachricht aktualisiert wird, und aus einem Konstantwert, welcher den Netzwerkknoten des Netzwerkes gemeinsam zur Verfügung gestellt wird; und
- b): Ver- und Entschlüsseln der in der Nachricht übertragenen Daten mittels eines kryptographischen Schlüssels und des gebildeten NONCE-Wertes.

Die Erfindung schafft ferner einen Datenträger, der ein derartiges Computerprogramm speichert.

Im Weiteren werden bevorzugte Ausführungsformen des erfindungsgemäßen Verfahrens zur kryptographisch geschützten Übertragung von Daten zwischen Netzwerkknoten eines Netzwerks und des erfindungsgemäßen Netzwerkes unter Bezugnahme auf die beigefügten Figuren zur Erläuterung erfindungswesentlicher Merkmale beschrieben.

Es zeigen:
- Figur 1: ein einfaches Ablaufdiagramm zur Darstellung eines Ausführungsbeispiels des erfindungsgemäßen Verfahrens zum kryptographisch geschützten Übertragen von Daten;
- Figur 2: ein einfaches Blockdiagramm zur Darstellung der Übertragung einer Nachricht zwischen einem Sendeknoten und einem Empfangsknoten des erfindungsgemäßen Netzwerks;

- Figur 3: ein Diagramm zur Darstellung eines möglichen Datenformates einer bei dem erfindungsgemäßen Verfahren übertragenen Nachricht;
- Figur 4: ein Blockdiagramm eines Ausführungsbeispiels eines in dem erfindungsgemäßen Netzwerk enthaltenen Netzwerkknotens zur Darstellung einer Verschlüsselung von Daten;
- Figur 5: ein Blockdiagramm eines Ausführungsbeispiels eines in dem erfindungsgemäßen Netwerk enthaltenen Empfangsknotens zur Darstellung der Entschlüsselung einer Nachricht;
- Figur 6: ein Beispiel für ein erfindungsgemäßes Netzwerk bei dem Nachrichten zwischen Netzwerkknoten nach dem erfindungsgemäßen Verfahren übertragen werden;
- Figuren 7A, 7B: verschiedene Varianten zur Bereitstellung eines gemeinsamen Konstantwerts durch einen zentralen Management-Netzwerkknotens bei dem erfindungsgemäße Verfahren;
- Figur 8: ein Ausführungsbeispiel eines erfindungsgemäßen Netzwerks;
- Figur 9: ein weiteres Ausführungsbeispiel eines erfindungsgemäßen Netwerks;
- Figur 10: ein weiteres Ausführungsbeispiel eines erfindungsgemäßen Netzwerks.

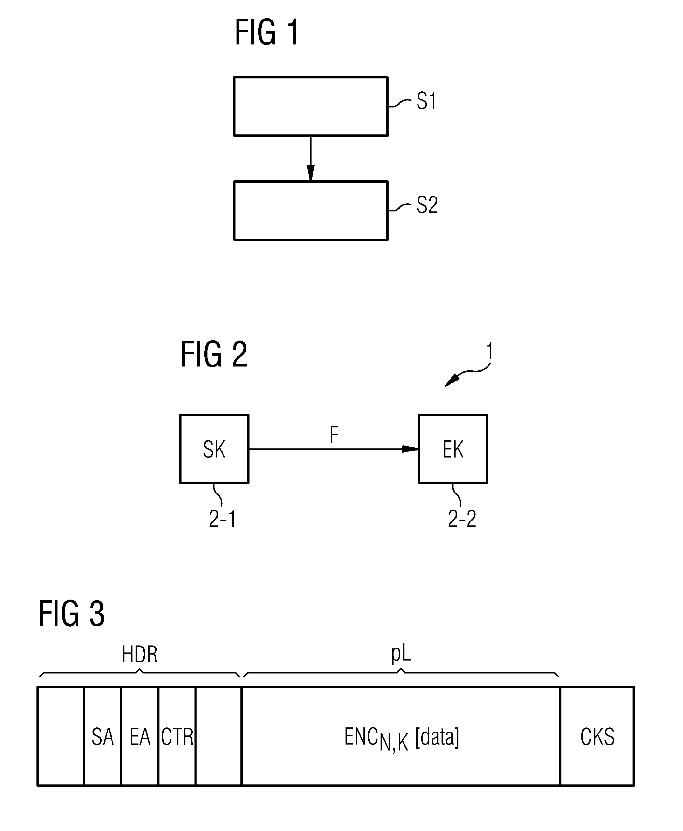

Wie man aus Figur 1 erkennen kann, umfasst das erfindungsgemäße Verfahren zum kryptographisch geschützten Übertragen von Daten zwischen Netzwerkknoten eines Netzwerks im Wesentlichen zwei Schritte.

In einem ersten Schritt S1 wird ein NONCE-Wert N gebildet. Dieser NONCE-Wert N wird von einem Zählwert CTR, welcher bei der anschließenden Übertragung der Nachricht bzw. des Frames F aktualisiert wird und aus einem Konstantwert EANCV (Externally Assigned Nonce Contribution Value) gebildet. Dieser netzwerkweit eingesetzte gemeinsame Konstantwert EANCV wird den Netzwerkknoten des erfindungsgemäßen Netzwerks gemeinsam zur Verfügung gestellt. Erfindungsgemäß wird der netzwerkweit eingesetzte Konstantwert EANCV von einem zentralen Management-Netzwerkknoten den übrigen Netzwerkknoten des Netzwerks zur Verfügung gestellt, beispielsweise über eine Broadcast-Nachricht oder über Unicast-Nachrichten. Bei einer möglichen Ausführungsform sendet der Management-Netzwerkknoten den Konstantwert EANCV über eine Broadcast-Nachricht an alle übrigen Netzwerkknoten des Netzwerks. Bei einer alternativen Ausführungsform sendet der Management-Netzwerkknoten den Konstantwert EANCV jedem Netzwerkknoten über eine jeweilige Unicast-Nachricht. Bei einer weiteren Ausführungsform wird der NONCE-Wert N nicht nur in Abhängigkeit von einem Zählwert CTR und dem Konstantwert EANCV gebildet, sondern zusätzlich auch in Abhängigkeit von einer Sendeknotenadresse SA desjenigen Sendenetzwerkknotens, der die ausgesendete Nachricht F zu einem anderen Empfangsnetzwerkknotens des Netzwerks überträgt.

Nachdem ein NONCE-Wert N im Schritt S1 gebildet worden ist, erfolgt im Schritt S2 eine Ver- oder eine Entschlüsselung der in der Nachricht F übertragenen Daten jeweils mittels eines kryptographischen Schlüssels K, und mittels des gebildeten NONCE-Wertes N. Ein Sendenetzwerkknoten, der Daten geschützt zu einem Empfangsnetzwerkknoten übertragen möchte, verschlüsselt die Daten mittels eines kryptographischen Schlüssels K und des sendeseitig gebildeten NONCE-Wertes N.

Nach Empfang einer Nachricht F wird die Nachricht F durch den Empfangsknoten mittels eines entsprechenden kryptographischen Schlüssels K und des NONCE-Wertes wieder entschlüsselt.

Figur 2 zeigt schematisch die Übertragung einer Nachricht bzw. eines Frames F innerhalb eines erfindungsgemäßen Netzwerks 1 von einem Sendeknoten 2-1 zu einem Empfangsknoten 2-2 des Netzwerks 1. Das Netzwerk 1 kann aus einer Vielzahl von Netzwerkknoten 2 bestehen, die untereinander Frames F austauschen. Die Übertragung der Frames bzw. Nachrichten F erfolgt zwischen den Netzwerkknoten 2 des Netzwerks entweder direkt oder indirekt über andere Netzwerkknoten des Netzwerks. Bei den Netzwerkknoten 2 kann es sich beispielsweise um Netzwerkknoten handeln, die einen oder mehrere Sensoren enthalten. Diese Sensor-Netzwerkknoten übertragen die erfassten Messdaten der Sensoren in Nachrichten F bzw. Frames an anderen Netzwerkknoten zu deren Auswertung. Bei den Sensoren kann es sich um beliebige Sensoren, beispielsweise Temperaturmessfühler oder dergleichen handeln. Bei einer bevorzugten Ausführungsform des erfindungsgemäßen Verfahrens werden die Messdaten in Nachrichten bzw. Datenpaketen oder Frames F übertragen.

Figur 3 zeigt ein mögliches Datenformat, wie es bei dem erfindungsgemäßen Verfahren eingesetzt werden kann. Der Frame F weist Header- bzw. Verwaltungsdaten HDR auf. Diese Header-Daten HDR enthalten Informationen über den Frame F, insbesondere über die Identität des Sendeknotens oder die Identität des Empfangsknotens. Wie in Figur 3 dargestellt enthält der Header HDR unter Anderem eine Sendeknotenadresse SA, eine Empfangsknotenadresse EA sowie weitere Verwaltungsdaten. Bei der Sendeadresse SA und der Empfangsadresse EA kann es sich beispielsweise um eine MAC-Adresse handeln.

Bei dem erfindungsgemäßen Verfahren enthält der Header HDR zusätzlich einen Zählwert CTR, der beispielsweise durch einen in dem Sendeknoten 2-1 durch einen internen Zähler gebildet wird. Dieser Zählwert CTR wird bei der Übertragung einer Nachricht F von dem Sendeknoten 2-1 zu den Empfangsknoten 2-2 aktualisiert, wobei die Aktualisierung in der Regel in einer Inkrementierung des Zählwertes CTR besteht. An die Header-Daten HDR schließen sich in dem Datenpaket bzw. dem Frame F Nutzdaten bzw. Payload-Daten an. Diese Nutzdaten sind beispielsweise verschlüsselte Daten von einem oder mehreren Sensoren des Sendeknotens 2-1. Die Daten bzw. Messdaten des sendenden Knotens 2-1 geben beispielsweise den Ort bzw. die Koordinaten des Sendeknotens 2-1 sowie die dort herrschende Temperatur an. Die verschlüsselten Daten können aber auch Steuerdaten bzw. Steuerbefehlsdaten umfassen. Die Nutzdaten des in Figur 3 dargestellten Frames F sind mit einem Schlüssel K und einem NONCE-Wert N verschlüsselt. Darüber hinaus kann die Nachricht bzw. der Frame F eine Prüfsumme CKS enthalten. Diese Prüfsumme kann eine digitale Signatur, eine Checksumme oder einen Authentisierungscode (Message Authentication Code) aufweisen.

Neben der Sendeadresse SA des Sendeknotens 2-1 bzw. der Sende-ID wird die Empfangsadresse EA des Empfangsknotens bzw. der Empfangs-ID mit dem aktualisierten Zählwert (TR) enthalten die Header-Daten HDR des in Figur 3 dargestellten Frames F, gegebenenfalls zusätzliche Verwaltungsdaten, wie beispielsweise einen Typ des Frames (Type), eine Länge des Datenfeldes bzw. eine Menge der in dem Datenpaket enthaltenen Nutzdaten (length) und weitere Flags. Der Typ des Frames bzw. der Nachricht kann beispielsweise angegeben, ob es sich um einen Daten-Frame, ein Steuerkommando oder um einen Acknowledgement-Befehl handelt. Innerhalb des Headers HDR kann zum Beispiel angegeben werden, dass ein Sicherheitsmechanismus aktiviert ist (Security Enable) oder welche Protokollversion benutzt wird. Bei einer möglichen Ausführungsform des erfindungsgemäßen Verfahrens werden die in der Nachricht F übertragenen Daten durch einen CCM-Algorithmus kryptographisch verschlüsselt, wie beispielsweise in 802.15.4-2006 angegeben. Dieses Verschlüsselungsverfahren ermöglicht es, die Vertraulichkeit, die Integrität oder beides zu gewährleisten.

Der in Figur 3 dargestellte Frame F bzw. die Nachricht N, die zwischen den Knoten 2 des Netzwerks 1 ausgetauscht werden, können drahtlos oder drahtgebunden übertragen werden. Eine drahtlose Kommunikation zwischen den Netzwerkknoten 2 bietet in vielen industriellen Anwendungen Vorteile. Die Vorteile umfassen beispielsweise geringe Installationskosten, eine flexible Installation der Netzwerkknoten 2 zur Vermeidung von mechanischem Verschleiß bei Kabeln oder Schleifkontakten und eine einfache Erweiterbarkeit des Netzwerks 1. Das erfindungsgemäße Verfahren erlaubt eine kryptographisch geschützte Übertragung von Daten zwischen Netzwerkknoten 2 eines derartigen drahtlosen Netzwerks 1, wobei ein Schutz insbesondere gegenüber wiedereingespielte Nachrichten bzw. Replay-Attacken gegeben ist.

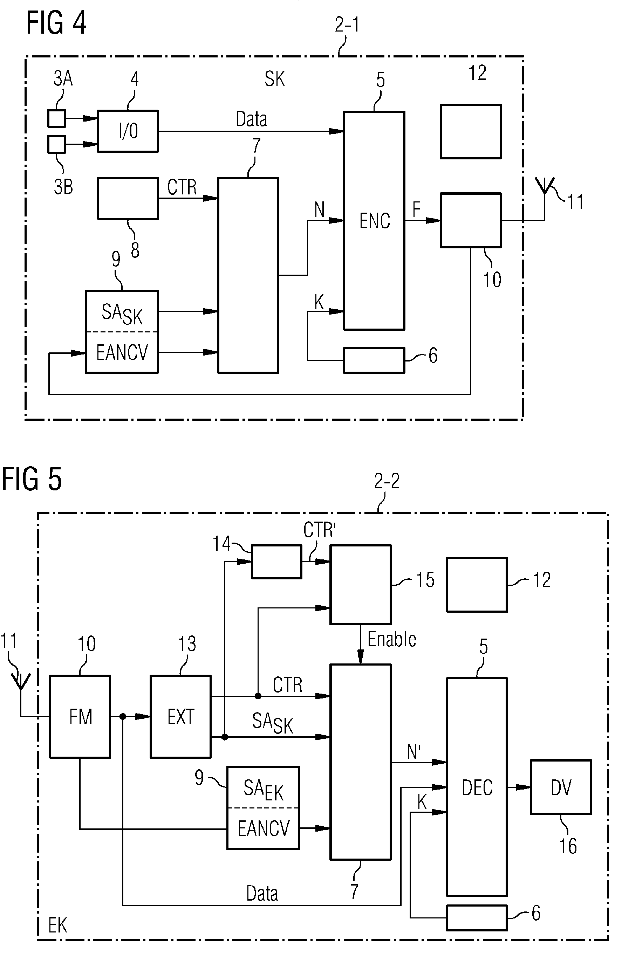

Figur 4 zeigt ein Blockschaltbild eines Netzwerkknotens 2 innerhalb des erfindungsgemäßen Netzwerks 1. Das in Figur 4 dargestellte Blockschaltbild stellt die Bildung eines NONCE-Wertes N in einem Sendeknotens 2-1 und die Verschlüsselung von Daten mit Hilfe eines kryptographischen Schlüssels K und des gebildeten NONCE-Wertes N dar. Der in Figur 4 dargestellte Sendeknoten 2-1 enthält zwei Sensoren 3A, 3B, die Messdaten über eine Ein-/Ausgabeeinheit 4 an eine Verschlüsselungseinrichtung 5 liefern. Ein Sensorknoten 2 des erfindungsgemäßen Netzwerks 1 kann über einen oder auch eine beliebig hohe Anzahl von verschiedenen Sensoren 3 verfügen. Bei einer alternative Ausführungsform weist der Netzwerkknoten 2 keine Sensoren auf, sondern es werden andere Daten, die beispielsweise aus einem Speicher ausgelesen werden, verschlüsselt in einer Nachricht F zu einem anderen Netzwerkknoten 2 übertragen. Bei der in Figur 4 dargestellten Verschlüsselungseinrichtung 5 kann es sich beispielsweise um einen Prozessor CPU handeln, der einen Verschlüsselungsalgorithmus ausführt. Der Verschlüsselungsalgorithmus ist beispielsweise ein CCM-Algorithmus. Als zugrundeliegende Blockchiffre kann dabei insbesondere der AES- oder DES-Algorithmus eingesetzt werden. Die Verschlüsselung der von der Ein-/Ausgabeeinheit 4 ausgegebenen Daten, die beispielsweise von den Sensoren 3 stammen, erfolgt mittels eines kryptographischen Schlüssels K, der aus einem Speicher 6 ausgelesen wird, und in Abhängigkeit von einem gebildeten NONCE-Wert N. Bei dem Speicher 6 kann es sich beispielsweise um einen nicht-flüchtigen Flash-Speicher handeln.

Der zur Verschlüsselung notwendige NONCE-Wert N wird durch eine Einheit 7 gebildet bzw. generiert. Diese Schaltung bzw. Einheit 7 bildet den NONCE-Wert N aus einem Zählwert CTR und aus einem Konstantwert EANCV. Bei einer möglichen Ausführungsform wird der NONCE-Wert N durch die Einheit 7 zusätzlich in Abhängigkeit von einer Senderadresse SA des Sendeknotens 2-1 gebildet. Wie man in Figur 4 erkennen kann, enthält der Sendeknoten 2-1 einen internen Zähler 8, der einen Zählwert CTR generiert, wobei der Zählwert bei der Übertragung bzw. beim Aussenden einer Nachricht F aktualisiert wird. Die Aktualisierung kann beispielsweise darin bestellen, dass der Zählwert CTR inkrementiert wird. Bei einer alternativen Ausführungsform kann die Aktualisierung des Zählwertes CTR auch durch Dekrementierung des Zählwertes erfolgen. In einer weiteren Ausführungsform kann die Aktualisierung des Zählwertes CTR auch durch Berechnen eine Zahlenfolge nach einer vorgegebenen Berechnungsvorschrift, z.B. zur Berechnung einer Pseudozufallszahlenfolge, erfolgen. Die Sendeadresse SA des Sendeknotens 2-1 sowie der gemeinsame Konstantwert EANCV können, wie in Figur 4 dargestellt, aus einem Speicher 9 ausgelesen werden. Bei dem Speicher 9 kann es sich beispielsweise um einen RAM-Speicher handeln. Die Einheit 7 bildet bei einer Ausführungsform einen NONCE-Wert N aus dem Zählwert CTR sowie aus dem Konstantwert EANCV. Bei einer alternativen Ausführungsform erfolgt die Bildung des NONCE-Wertes N zusätzlich in Abhängigkeit von der Sendeknotenadresse SA der Sendeknoten 2-1, die aus dem Speicher 9 ausgelesen wird.

Bei einer möglichen Ausführungsform des erfindungsgemäßen Verfahrens wird der NONCE-Wert N durch die Einheit 7 durch Konkatenation bzw. Verletzung der Sendeknotenadresse SA des Sendenetzwerkknotens 2-1, des gemeinsamen Konstantwertes EANCV und des Zählwertes CTR, der von dem internen Zähler 8 in dem der Sendenetzwerkknoten 2-1 erzeugt wird, gebildet. Bei dieser Ausführungsform werden die jeweiligen Bitfolgen konkateniert bzw. aneinander gehängt.
N:=SA|EANCV|CTR

Bei einer alternativen Ausführungsform wird der NONCE-Wert N durch die Einheit 7 mittels einer Hash-Funktion gebildet, beispielsweise MD5 oder SHA1, SHA-256. Die Hash-Funktion wird auf die Konkatenation der Sendeknotenadresse SA des Sendenetzwerkknotens 2-1, des gemeinsamen Konstantwertes EANCV und des Zählwertes CTR angewendet.
N:=HASH(SA|EANCV|CTR)

Bei alternativen Ausführungsformen können die Sendeknotenadresse SA, der Konstantwert EANCV und der Zählwert CTR in einer beliebigen anderen Reihenfolgen an konkateniert bzw. aneinandergehängt werden. Beispielsweise kann der NONCE-Wert auch wie folgt gebildet werden:
N:=SA|CTR|EANCV oder
N:=EANCV|SA|CTR usw.

Bei der Einheit 7 kann es sich um eine fest-verdrahtete Schaltung handeln, um den schaltungstechnischen Aufwand minimal zu halten. Bei einer alternativen Ausführungsform erfolgt die Bildung des NONCE-Wertes N durch die Einheit 7 durch Ausführen eines entsprechenden Programms zur Bildung eines NONCE-Wertes N, wobei dieses NONCE-Wert-Generierungsprogramm bei einer möglichen Ausführungsform konfigurierbar ist. Der gebildete NONCE-Wert N wird der Verschlüsselungseinheit 5 zur Verfügung gestellt. Die Verschlüsselungseinheit 5 kann ihrerseits eine fest-verdrahtete Schaltung sein oder aus einem Mikroprozessor bestehen. Bei einer möglichen Ausführungsform erfolgt die Bildung des NONCE-Wertes N und die Verschlüsselung durch den gleichen Mikroprozessor bei Ausführung entsprechender Prozeduren. Die Verschlüsselungseinheit 5 verschlüsselt die Daten, beispielsweise Sensor-Messdaten, mittels eines kryptographischen Schlüssels K und des von der Einheit 7 gebildeten NONCE-Wertes N. Die Verschlüsselung kann symmetrisch oder asymmetrisch erfolgen. Die verschlüsselten Daten werden anschließend als Nutzdaten in einen Frame F bzw. in ein Datenpaket eingepackt, wie es in Figur 3 dargestellt ist. Dieser Frame F wird von einem Funk-Modul 10 des Knotens 2-1 über eine Sende-/Empfangsantenne 11 ausgestrahlt. Die Stromversorgung des Knotens 2-1 erfolgt, wie in Figur 4 dargestellt, durch eine Stromversorgungseinheit 12. Bei einer bevorzugten Ausführungsform weist der Knoten 2 des Netzwerkes 1 eine autonome Strom- bzw. Energieversorgung auf, beispielsweise eine Batterie, einen Akkumulator oder Solarzellen.

Der in dem Speicher 9 gespeicherte netzwerkweit eingesetzte Konstantwert EANCV ist bei einer bevorzugten Ausführungsform des erfindungsgemäßen Verfahrens durch einen zentralen Managementknoten umkonfigurierbar. Erhält der in Figur 4 dargestellte Knoten 2-1 über die Sende-Empfangsantenne 11 eine für ihn bestimmte Unicast-Nachricht oder eine Broadcast-Nachricht, wird der von einem Management-Netzwerkknoten erhaltene netzwerkweit einzusetzende Konstantwert EANCV von dem Funkmodul 10 in den Speicher 9 eingeschrieben. Anschließend kann der Sendeknoten 2-1 den aktuellen Konstantwert EANCV des Netzwerkes zur Verschlüsselung benutzen.

Der Konstantwert EANCV wird dabei auf allen Sensorknoten 2 des Netzwerkes 1 umkonfiguriert, d.h. es empfängt, speichert und verwendet jeder Sensorknoten 2 des Netzwerks 1 den neuen netzwerkweit eingesetzten Konstantwert EANCV.

Bei einer möglichen Ausführungsform erfolgt die Umkonfiguration des netzwerkweit eingesetzten Konstantwertes EANCV in festen, das heißt regelmäßigen Zeitabständen, beispielsweise täglich oder monatlich.

Bei einer alternativen Ausführungsform erfolgt die Umkonfiguration des gemeinsamen Konstantwertes EANCV, wenn die in dem Netzwerk 1 übertrage Datenmenge einen vorgegebenen einstellbaren Datenmengen-Schwellenwert überschreitet.

Bei einer alternativen Ausführungsform erfolgt die Umkonfiguration des gemeinsamen Konstantwertes EANCV durch den Managementknoten bei Überschreitung einer vorgegebenen Anzahl von übertragenen Nachrichten F innerhalb des Netzwerkes 1.

Bei einer weiteren möglichen Ausführungsform erfolgt die Umkonfiguration des netzwerkweit eingesetzten Konstantwertes EANCV beim Überschreiten einer vorgegebenen Anzahl von übertragenen Nachrichten F bei einem Knoten 2 innerhalb des Netzwerkes 1.

Bei einer weiteren Ausführungsform des erfindungsgemäßen Verfahrens erfolgt eine Umkonfiguration des gemeinsam eingesetzten Konstantwertes EANCV, wenn ein Zähler innerhalb des Netzwerkes 1 einen vorgegebenen Zählwert erreicht. Wird beispielsweise durch einen internen Zähler eines Sensorknotens 2 oder eines Gateways, das als Managementnetzwerkknoten dienen kann, ein vorgegebener Zählwert CTR erreicht, erfolgt die Umkonfiguration des Konstantwertes EANCV. Der Schwellenwert kann bei einer möglichen Ausführungsform je nach Anwendung eingestellt werden.

Bei einer weiteren Ausführungsform des erfindungsgemäßen Verfahrens erfolgt eine Umkonfiguration des gemeinsamen Konstantwertes EANCV bei Eintritt eines vorgegebenen Ereignisses. Wird beispielsweise eine bestimmte Situation durch das Netzwerk 1 erkannt, etwa ein Sicherheitsalarm oder dergleichen, kann automatisch die Umkonfiguration des gemeinsamen Konstantwertes EANCV eingeleitet werden. Auf diese Weise ist es nicht möglich, ältere NONCE-Werte wieder einzuspiegeln oder fälschlicherweise einen fehlerfreien Zustand des Netzwerkes 1 bzw. fälschlicherweise einen Sonderzustand des Netzwerkes 1 vorzugegeben.

Bei einer weiteren Ausführungsform des erfindungsgemäßen Verfahrens erfolgt die Umkonfiguration des Konstantwertes EANCV, wenn die verschlüsselt übertragenen Daten eine vorgegebene Bedingung erfüllen. Wenn beispielsweise in einem Sensornetzwerk 1 eine Temperaturänderung von mehr als 5 Kelvin erfasst wird, kann eine Umkonfiguration vorgenommen werden. Auf diese Weise können ältere Messwerte, zum Beispiel diejenigen, die mehr als 5 Kelvin Unterschied haben, von einem Angreifer nicht wiedereingespiegelt werden. Das bedeutet, dass ein maximaler Messfehler, den ein Angreifer durch wiedereingespiegelte Messnachrichten bewirken kann, begrenzt wird.

Der aktuelle bzw. umkonfigurierte EANCV-Wert wird bei einer möglichen Ausführungsform von einem zentralen Managementknoten des Netzwerkes 1 den Knoten 2 des Netzwerkes 1 zugewiesen. Dies kann beispielsweise durch eine Broadcast-Nachricht erfolgen. Alternativ werden die verschiedenen Netzwerkknoten 2 mit einer Unicast-Nachricht jeweils separat über den umkonfigurierten Konstantwert EANCV in Kenntnis gesetzt.

Bei einer alternativen Ausführungsform kann der gemeinsame Konstantwert EANCV den jeweiligen Netzwerkknoten in festen Zeitabständen automatisch inkrementiert bzw. um eins erhöht werden. Beispielsweise kann jeder Netzwerkknoten 2 täglich seinen EANCV um 1:00 Uhr nachts inkrementieren. Bei einer weitern Ausführungsform ist es anhand des EANCV-Wertes, welcher in von anderen Knoten 2 des Netzwerks 1 gesendeten Nachrichten F verwendet wird, ersichtlich, dass ein anderer Knoten 2 bereits auf einen aktualisierten EANCV-Wert gewechselt hat. In diesem Falle kann ein Empfangsknoten 2-2, der erkennt, dass ein Sendeknoten 2-1 auf einen EANCV-Wert gewechselt hat, seinen EANCV ebenfalls auf den neuen Wert einstellen.

Bei einer weiteren Ausführungsvariante bilden die EANCV-Werte eine sogenannte Hash-Chain bzw. Hash-Kette. Dabei sind ein aktualisierter EANCV-Wert und ein bisheriger EANCV-Wert über eine Hash-Funktion, beispielsweise MD5, SHA-1, SHA-256 miteinander verbunden:
Hash(EANCV-neu) = EANCV-alt.

Da eine kryptographische Hash-Funktion nicht umkehrbar ist, kann dieser aus dem alten, bisherigen EANCV-Wert praktisch nicht bestimmt werden. Wenn der neue EANCV-Wert bekannt ist, kann durch Berechnen von dessen Hash-Wertes überprüft werden, ob der neue EANCV-Wert korrekt ist oder nicht. Die Übertragung des neuen Hash-Wertes an die Netzwerkknoten 2 ist daher gegen Manipulation geschützt.

Bei einer weiteren Ausführungsform des erfindungsgemäßen Verfahrens wird nach einem Einspielen des aktualisierten neuen EANCV-Wertes der bisherige EANCV-Wert für einen gewissen Zeitraum gespeichert und kann weiterhin verwendet werden. In einem Überlappungszeitraum kann auf diese Weise mit beiden EANCV-Werten kommuniziert werden. Auf diese Weise können auch Nachrichten mit Netzwerkknoten 2 ausgetauscht werden, die noch nicht über den aktualisierten EANCV-Wert verfügen. In diesem Überlappungszeitraum bzw. diese Übergangszeit kann ein Empfangsknoten 2-2 beide EANCV-Werte nutzen, um festzustellen, welcher EANCV-Wert zu einer erfolgreichen Entschlüsselung führt. Bei dieser Ausführungsvariante sind allerdings zwei Entschlüsselungsvorgänge notwendig, so dass der Rechenaufwand relativ hoch ist.

Bei einer alternativen Ausführungsform wird in einem Bit bzw. in einem Flag des Headers HDR der übertragenen Nachricht F angezeigt, ob der bisherige oder ein aktualisierter, EANCV-Wert zur Entschlüsselung zu benutzen ist. Auf diese Weise wird eindeutig angezeigt, welcher EANCV-Wert zur Entschlüsselung verwendet werden muss. Das Anzeige-Flag wechselt bei jedem Update bzw. bei jeder Umkonfiguration des netzwerkweit gemeinsam benutzten Konstantwertes EANCV.

Figur 5 zeigt ein Blockschaltbild zur Darstellung eines Entschlüsselungsvorgangs innerhalb eines Empfangsknotens 2-2 des erfindungsgemäßen Netzwerkes 1.

Bei einer bevorzugten Ausführungsform des erfindungsgemäßen Netzwerkes 1 kann jeder Knoten 2 innerhalb des Netzwerkes 1 sowohl als Sendeknoten 2-1, wie in Figur 4 dargestellt, als auch als Empfangsknoten 2-2, wie in Figur 5 dargestellt, fungieren.

Bei der in Figur 5 dargestellten Ausführungsform wird eine in dem Empfangsknoten 2-2 enthaltene Entschlüsselungseinheit (decrypt) durch die gleiche Einheit gebildet, wie die in Figur 4 dargestellte Verschlüsselungseinheit, beispielsweise durch eine CPU bzw. einen Prozessor. Außerdem erfolgt die empfangsseitige Bildung des NONCE-Wertes N' durch die gleiche Einheit 7 wie die Bildung des NONCE-Wertes N auf Sendeseite. Bei dem in Figur 5 dargestellten Ausführungsbeispiel empfängt der Empfangsknoten 2-2 über eine drahtlose Schnittstelle einen übertragenen Frame F bzw. eine Nachricht N, beispielsweise in dem in Figur 3 dargestellten Datenformat. Aus den Header-Daten HDR des empfangenen Frames F werden durch eine Einheit 13 der übertragene Zählwert CTR sowie die Sendeadresse SA des Sendeknotens 2-1 extrahiert. Auf Grundlage der übertragenen Sendeknotenadresse SA-SK wird ein interner Zähler 14 innerhalb des Empfangsknotens 2-2 selektiert bzw. adressiert. Der interne Zähler 14 stellt einen Zähler CTR' bereit. Dieser selektierte Zählwert CTR' wird bei der in Figur 5 dargestellten Ausführungsform durch eine Vergleichseinheit 15 mit dem in der Nachricht bzw. in dem Frame F übertragenen Zählwert CTR verglichen. Falls der übertragene Zählwert CTR aktueller ist als der selektierte Zählwert CTR' erzeugt der Komparator 15 ein Enable-Signal für die Einheit 7 zur Bildung eines empfangsseitigen NONCE-Wertes N'. Die Bildung des NONCE-Wertes N' im Empfangsknoten 2-2 erfolgt in gleicher Weise wie die Bildung des NONCE-Wertes N innerhalb des Sendeknotens 2-1 und ist in Zusammenhang mit Figur 4 erklärt. Der empfangsseitig gebildete NONCE-Wert N' wird der Dekodiereinheit 5 bzw. der CPU zugeführt, welche die in der Nachricht F enthaltenen Daten mit Hilfe des Schlüssels K und dem empfangsseitig gebildeten NONCE-Wert N' entschlüsselt. Die entschlüsselten Daten können beispielsweise durch eine Datenverarbeitungseinheit 16 innerhalb des Empfangsknotens bearbeitet bzw. ausgewertet werden. Bei einer möglichen Ausführungsform bilden die Dekodiereinheit 5, in der ein Dekodier- bzw. Entschlüsselungsalgorithmus ausgeführt wird, die Einheit 7 zur Bildung des NONCE-Wertes N' sowie die Datenverarbeitungseinheit 16 eine Einheit, beispielsweise in Form eines Mikroprozessors. Bei einer alternativen Ausführungsform ist die Entschlüsselungseinheit 5 eine speziell dafür vorgesehene fest-verdrahtete Schaltung.

Bei einer bevorzugten Ausführungsform des erfindungsgemäßen Verfahrens wird der sendeseitig oder empfangsseitig gebildete NONCE-Wert nur einmal mit demselben Schlüssel K verwendet. Dabei kann der Schlüssel K gewechselt werden, wenn ein möglicher Wertebereich des NONCE-Wertes ausgeschöpft ist. Der Sendeknoten 2-1 konstruiert bzw. bildet den NONCE-Wert N, um das zu übertragende Frame bzw. das übertragene Datenpaket kryptographisch zu schützen. Der Empfangsknoten 2-2 hat somit den selben NONCE-Wert aufgrund von Informationen, die in dem Datenpaket bzw. dem empfangenen Frame enthalten sind und gegebenenfalls auf Basis gespeicherter Zustandsinformationen, beispielsweise eines Zählwertes. Die Aktualität eines NONCE-Wertes N kann durch den Sendeknoten 2-1 auf unterschiedliche Weise gewährleistet werden und durch den Empfangsknoten 2-2 auf unterschiedliche Weise geprüft werden. Bei dem in Figur 5 gezeigten Ausführungsbeispiel wird zur Gewährleistung der Aktualität des NONCE-Wertes N ein Zählwert CTR verwendet. Damit der Empfangsknoten die Aktualität eines NONCE-Wertes prüfen kann, speichert der Empfangsknoten 2-2 Informationen über den letzten empfangenen Zählwert ab und akzeptiert im Weiteren nur NONCE-Werte die aktueller sind als der gespeicherte Zählwert.

Bei der Konstruktion bzw. Bildung des NONCE-Wertes durch die Einheit 7 des Sendeknotens 2-1 oder des Empfangsknotens 2-2 können unterschiedliche Parameter eingehen. Diese Parameter können bei einer möglichen Ausführungsform neben einem Zählwert oder einer Knotenadresse auch ein Prioritätsfeld fassen. Als Zählwert eignet sich beispielsweise ein Frame-Counter der die Anzahl der übertragenen Frames F mitzählt.

Das erfindungsgemäße Verfahren zur kryptographisch geschützten Übertragung von Daten zwischen Netzwerkknoten 2 eines Netzwerks 1 eignet sich insbesondere auch für Netzwerke 1, die über keine synchronisierte Uhrzeit verfügen. Beispielsweise eignet sich das erfindungsgemäße Verfahren insbesondere für ein Wireless-Sensor-Network WSN, das heißt für ein Netzwerk, das aus Sensorknoten besteht in denen einen synchronisierte Uhrzeitinformation nicht vorliegt.

Die Bitbreite des Zählwertes CTR, der zur Prüfung der Aktualität eines NONCE-Wertes N herangezogen wird, wird vorzugsweise relativ breit gewählt, beispielsweise 32, 48 oder 64 Bit. Der Grund hierfür besteht darin, dass je breiter der Zähler bzw. je größer der Zählerwertebereich desto seltener muss der Schlüssel K ermittelt werden und desto seltener ist eine Neukonfiguration des Schlüssels K notwendig. Die Bitbreite des Zählerwertes CTR kann jedoch auch relativ klein gewählt werden, beispielsweise 4, 8 oder 16 Bit. Dies hat den Vorteil, dass nur wenige Bits für den verwendeten Zählerwertes CTR gespeichert und insbesondere übertragen werden müssen.

Die Verschlüsselung von Daten kann mit Hilfe des Schlüssels K und des gebildeten NONCE-Wertes N mit unterschiedlichen Verschlüsselungsalgorithmen erfolgen. Beispielsweise können die Daten kryptographisch mittels eines AES- oder DES-Algorithmus verschlüsselt werden, um den Frame F vor Manipulationen zu schützten. Vorzugsweise werden diese in einem CCM-Modus verwendet.

Der zur Bildung des NONCE-Wertes N herangezogene Konstantwert EANCV ist vorzugsweise netzwerkweit gültig. Das bedeutet, dass alle Netzwerkknoten des Netzwerkes 1 den gleichen EANCV-Wert zur Ver- und Entschlüsselung verwenden. Bei einer Variante wird der Konstantwert EANCV einer Teilgruppe der Knoten bzw. einer Teilmenge der Netzwerkknoten 2 zur Kommunikation untereinander zugewiesen.

Bei dem in einer Verschlüsselung eingesetzten kryptographischen Schlüssel K kann es sich um einen beliebigen Schlüssel handeln. Bei dem Schlüssel kann es sich beispielsweise um einen Netzwerkschlüssel (network key) handeln, der allen Netzwerkknoten 2 des Netzwerks 1 bekannt ist. Bei einer alternativen Ausführungsform ist der verwendete Schlüssel ein Verbindungsschlüssel (link key), der zwei direkt benachbarten Netzwerkknoten des Netzwerkes 1 bekannt ist. Bei einer weiteren Ausführungsform kann es sich bei dem Schlüssel K um einen Ende-zu-Ende-Schlüssel (end-to-end-key) handeln, der an den Endpunkten bzw. Endknoten der Kommunikation beispielsweise zwei Sensorknoten oder einem Sensorknoten und einem GatewayKnoten bekannt ist. Bei weiteren Ausführungsvarianten ist der Schlüssel K ein Broadcast-Schlüssel oder ein Multicast-Schlüssel. Der bei der Verschlüsselung eingesetzte NONCE-Wert N kann durch Konkatenation von Bitfolgen verschiedener Parameter mit dem Konstantwert EANCV gebildet werden, beispielsweise durch Konkatenation des Konstantwertes EANCV mit einem Zählwert CTR und einer Senderknotenadresse SA. Bei einer möglichen Ausführungsform ist die Bitbreite des gebildeten NONCE-Wertes N variabel. Falls die Länge bzw. Bitbreite des EANCV-Wertes zu groß ist, beispielsweise falls textuelle Zeichenketten beliebiger Länge verwendet werden, kann mit Hilfe einer Hash-Funktion ein NONCE-Wert N mit einer fest vorgegebenen Länge berechnet werden.

Der jeweils in dem Netzwerk bzw. in einem Teilnetzwerk aktuell gültige Konstantwert EANCV wird bei einer bevorzugten Ausführungsform durch einen zentralen Managementknoten den Netzwerkknoten 2 des Netzwerkes 1 zugewiesen, wobei es sich bei dem Managementknoten beispielsweise um ein Gateway, einen Netzwerkmanagementserver (network manager) oder um einen Sicherheitsserver (security server, security manager) handelt. Die Zuweisung dieses EANCV-Wertes an die verschiedenen Knoten 2 des Netzwerkes 1 durch den Managementknoten erfolgt ebenfalls kryptographisch-geschützt.

Das erfindungsgemäße Verfahren bietet einen Schutz gegen sogenannte Replay-Attacken. Ein in der Vergangenheit übertragener Frame F, der durch einen Dritten abgehört und von diesem Dritten eingespielt wird, kann bei dem erfindungsgemäßen Übertragungsverfahren erkannt werden. Der eingespielte Frame F, der unter Verwendung eines nicht-aktuellen EANCV-Wertes generiert wurde, wird durch den Empfangsknoten 2-2 nicht akzeptiert. Ein zusätzlicher Schutz gegen Replay-Attacken wird mit Hilfe des mitübertragenen Zählwertes CTR erreicht. Dabei speichert der Empfangsknoten Informationsdaten über den zuletzt von einem Sendeknoten 2-1 empfangenen Zählwert CTR. In dem erfindungsgemäßen Verfahren wird der Zählwert CTR vorteilhafterweise aus einem relativ kleinen Wertebereich entnommen, beispielsweise 4, 8 oder 16 Bit, da der Zählwert CTR nur bezüglich jedes Konstantwertes EANCV eindeutig sein muss.

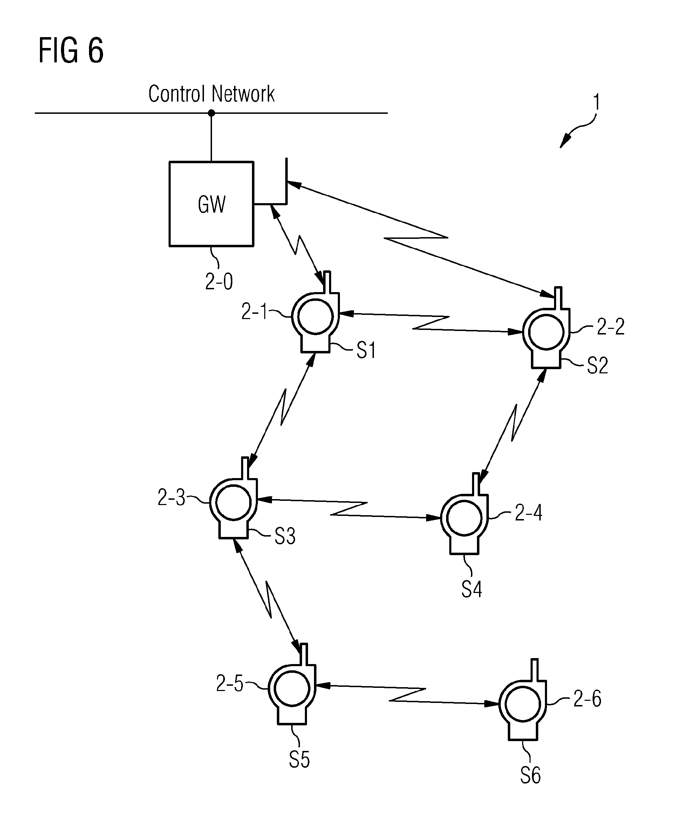

Bei dem in Figur 6 dargestellten Beispielnetzwerk können 6 Sensorknoten 2 mit ein Gatewayknoten 2-0 über eine Funkschnittstelle kommunizieren. In dem in Figur 6 dargestellten Ausführungsbeispiel stellt der Gatewayknoten 2-0 einen netzwerkweit eingesetzten Konstantwert EANCV den übrigen Netzwerkknoten 2-1 bis 2-6 zur Verfügung. Die Sensorknoten 2-1, 2-3, 2-4, 2-5, 2-6 weisen jeweils mindestens einen Sensor zur Erfassung von Messdaten, beispielsweise einer Umgebungstemperatur auf. Diese Messdaten werden verschlüsselt und als Frames F zur Auswertung der Messdaten übertragen. Der EANCV-Wert wird erfindungsgemäß von dem zentralen Managementknoten, das heißt durch den Gatewayknoten 2-0 des drahtlosen Sensornetzwerkes 1 an die übrigen Knoten 2-1 bis 2-6 übermittelt, die den EANCV-Wert zur weiteren Verwendung speichern. Die Übermittlung des EANCV-Wertes erfolgt manipulationssicher. Dies kann beispielsweise durch eine geschützte Übertragung zwischen dem zentralen Gateway 2-0 und den Sensorknoten 2-1 bis 2-6 geschehen. Alternativ stellt die Verbindung einen Hash-Chain dar, bei der ein Hash-Wert des aktualisierten EANCV-Wertes von dem bisherigen EANCV-Wert abgeleitet wird.

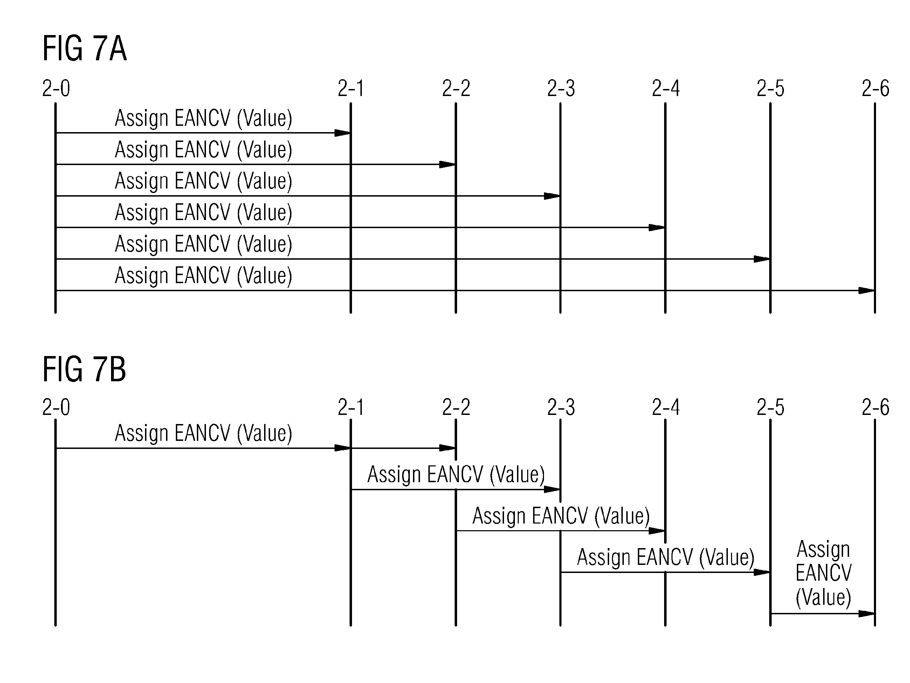

Die Figuren 7A, 7B zeigen verschiedene Alternativen zur Übermittlung eines EANCV-Wertes von einem Managementknoten 2-0 zu übrigen Netzwerkknoten. Bei der in Figur 7A dargestellten Alternative wird der EANCV-Wert von dem Gatewayknoten 2-0 jeweils mit einer Unicast-Nachricht (assign) separat an die verschiedenen Sensorknoten 2-1 bis 2-6 des Netzwerkes 1 übertragen. Dies bedeutet, dass jeder Sensorknoten 2-1 bis 2-6 separat den aktuellen EANCV-Wert erhält.

In der in Figur 7B dargestellten Alternative erfolgt die Übermittlung des EANCV-Wertes mittels einer Broadcast- bzw. einer Multicast-Nachricht. Bei dieser Übermittlungsart wird der aktuelle EANCV-Wert von dem Gatewayknoten 2-7 über Zwischenknoten weitergeleitet. Dabei kann das Netzwerk 1 geflutet werden, so dass alle Sensorknoten die Zuweisungsnachricht mit dem aktuellen EANCV-Wert erhalten.

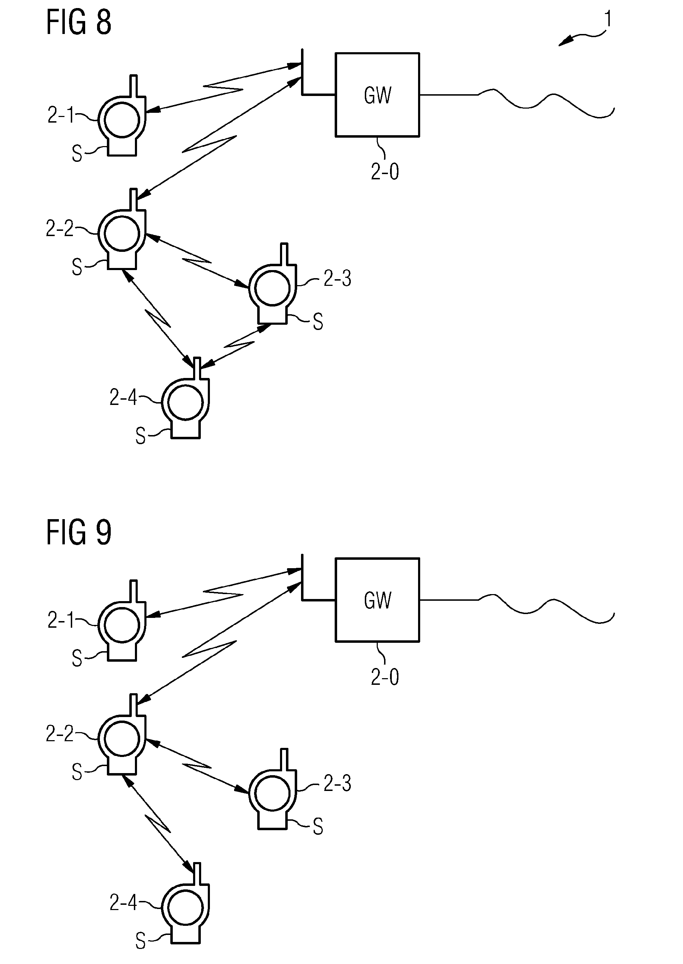

Figur 8 zeigt ein weiteres Ausführungsbeispiel des erfindungsgemäßen Netzwerkes 1. Bei diesem Ausführungsbeispiel handelt es sich um einen Sensornetzwerk mit Multi-Hop-Mesh-Topologie.

Figur 9 zeigt ein weiteres Ausführungsbeispiel des erfindungsgemäßen Netzwerkes 1 mit einer Multi-Hop-Netzwerk-Topologie, die eine Baumstruktur aufweist.

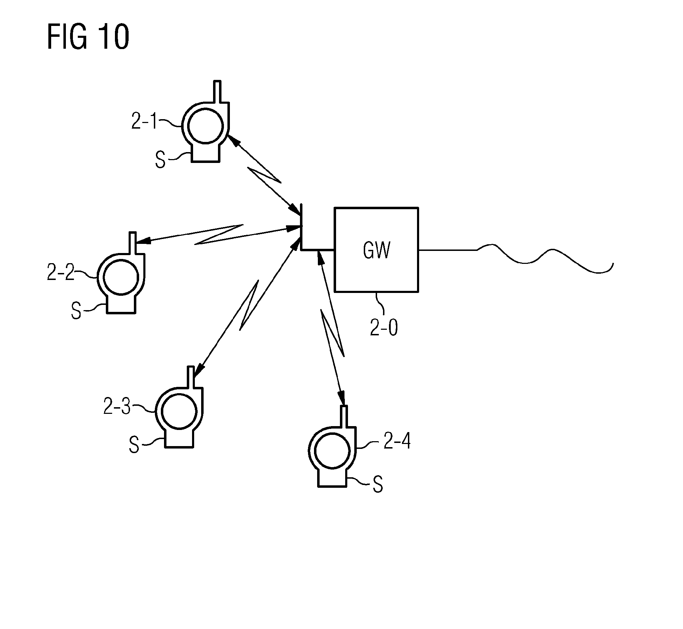

Figur 10 zeigt ein weiteres Ausführungsbeispiel des erfindungsgemäßen Netzwerkes 1 mit einer Single-Hop-Netzwerk-Topologie bzw. einer Sternstruktur.

Bei den in Figuren 8-10 dargestellten Ausführungsbeispielen werden die Netzwerkknoten 1 durch Sensorknoten gebildet, die jeweils über mindestens einen Sensor verfügen. Das erfindungsgemäße Verfahren ist jedoch nicht auf die Übertragung von Nachrichten zwischen Sensorknoten 2 beschränkt, vielmehr können die Netzwerkknoten auch Aktoren bzw. eine Kombination aus Sensoren und Aktoren aufweisen. Bei einer möglichen Ausführungsform ist das Gateway 2-0, wie es in den Figuren 6-10 dargestellt ist, mit einem Computernetzwerk verbunden, beispielsweise einem Intranet oder einem Fertigungsnetzwerk. Bei einer möglichen Ausführungsform können auch mehrere Gateways vorhanden sein.

Das erfindungsgemäße Netzwerk 1 ist zudem nicht auf drahtlose Netzwerke beschränkt. Die Nachrichten F zwischen verschiedenen Netzwerkknoten 2 des Netzwerks 1 können auch drahtgebunden über eine Leitung übertragen werden.

In dem erfindungsgemäßen Netzwerk 1 wird derselbe EANCV-Wert zur Kommunikation zwischen den Knoten 2 verwendet. Dabei wird in den verschiedenen Knoten 2 jeweils nur wenig Speicherplatz benötigt, weil nur ein gemeinsamer EANCV-Wert gespeichert werden muss, unabhängig von der Anzahl von Kommunikationspartnern und von verwendeten Schlüsseln. So muss beispielsweise bei dem erfindungsgemäßen Verfahren nicht je ein Wert je Kommunikationspartner oder je Schlüssel oder je Kombination aus Kommunikationspartner und Schlüssel gespeichert werden. Somit ist es möglich, eine große effektive NONCE-Länge bei gleichzeitig geringen zu speichernden Datenumfang zu erreichen. Dadurch wird die Anforderung nach einem Re-Keying vermieden bzw. ein Re-Keying muss nur noch selten durchgeführt werden. Dies ermöglicht auch, die Zähler-Werte-Bereich relativ klein zu halten.

## Patentansprüche

1. Verfahren zum kryptographisch geschützten Übertragung von Daten zwischen Netzwerkknoten (2) eines Netzwerkes (1), wobei zur Übertragung der Daten in einer Nachricht (F) die folgenden Schritte ausgeführt werden:
a) Bilden eines NONCE-Wertes (N), aus einem Zählwert (CTR), welcher bei der Übertragung der Nachricht (F) aktualisiert wird, und aus einem Konstantwert (EANCV), welcher von einem zentralen Management-Netzwerkknoten (2-0) den übrigen Netzwerkknoten (2-i) des Netzwerkes (1) gemeinsam zur Verfügung gestellt wird; und
b) Ver- und Entschlüsseln der in der Nachricht (F) übertragenen Daten mittels eines kryptographischen Schlüssels (K) und des gebildeten NONCE-Wertes (N).

2. Verfahren nach Anspruch 1,
wobei der NONCE-Wert (N) zusätzlich in Abhängigkeit von einer Sendeknotenadresse (SA) desjenigen Sendenetzwerkknotens (2-1) gebildet wird, der die Nachricht (F) zu einem anderen Empfangsnetzwerkknoten (2-2) des Netzwerks (1) überträgt.

3. Verfahren nach Anspruch 1,
wobei der gemeinsame Konstantwert (EANCV) von dem zentralen Management-Netzwerkknoten (2-0) durch Aussenden einer Broadcast-Nachricht oder durch Aussenden von Unicast-Nachrichten an die Netzwerkknoten (2-i) des Netzwerks (1) übertragen wird.

4. Verfahren nach Anspruch 1 oder 3,
wobei der gemeinsame Konstantwert (EANCV) von dem zentralen Management-Knoten (2-0) umkonfigurierbar ist.

5. Verfahren nach Anspruch 4,
wobei eine Umkonfiguration des gemeinsamen Konstantwertes (EANCV) in festen Zeitabständen, nach Überschreiten einer vorgegebenen übertragenen Datenmenge, nach Überschreiten einer vorgegebenen Anzahl von übertragenen Nachrichten (F), nach Erreichen eines vorgegebenen Zählwertes bei einem der Netzwerkknoten (2-i) des Netzwerks (1), beim Eintritt eines vorgegebenen Ereignisses, oder bei einer Übertragung von Daten, die eine vorgegebene Bedingung erfüllen, erfolgt.

6. Verfahren nach Anspruch 2,
wobei der NONCE-Wert (N) durch Konkatenation der Sendeknotenadresse (SA) des sendenden Netzwerkknotens (2-1), des gemeinsamen Konstantwertes (EANCV) und des Zählwertes (CTR), der von einem internen Zähler (8) des Sendenetzwerkknotens (2-1) erzeugt wird, gebildet wird.

7. Verfahren nach Anspruch 2,
wobei der NONCE-Wert (N) durch eine Hash-Funktion der Konkatenation der Sendeknotenadresse (SA) des Sendenetzwerkknotens (2-1), des gemeinsamen Konstantwertes (EANCV) und des Zählwertes (CTR), der von einem internen Zähler (8) des Sendenetzwerkknotens (1-2) erzeugt wird, gebildet wird.

8. Verfahren nach einem der vorangehenden Ansprüche 1-7,
wobei das Verschlüsseln und Entschlüsseln der in der Nachricht übertragenen Daten durch einen CCM-Algorithmus erfolgt.

9. Verfahren nach einem der Ansprüche 2-8,
wobei die übertragene Nachricht (F) Header-Daten (HDR), welche eine Sendeknotenadresse (SA), eine Empfangsknotenadresse (EA) und den aktuellen Zählwert (CTR) des Sendenetzwerkknotens (2-1) aufweisen, und
Nutzdaten (PL), welche die verschlüsselten Daten aufweisen, umfasst.

10. Verfahren nach Anspruch 9,
wobei der Empfangsnetzwerkknoten (2-2) den in der Nachricht (F) übertragenen Zählwert (CTR) des Sendenetzwerkknotens (2-1) mit einem anhand der in der Nachricht (F) übertragenen Sendeknotenadresse (SA) selektierten Zählwert (CTR') eines internen Zählers (14) des Empfangsnetzwerkknotens (2-2) vergleicht, und aus dem übertragenen Zählwert (CTR), aus dem gemeinsamen Konstantwert (EANCV) und aus der übertragenen Sendeknotenadresse (SA) einen empfangsseitigen NONCE-Wert (N') bildet, falls der übertragene Zählwert (CTR) aktueller ist als der selektierte Zählwert (CTR'),
wobei der empfangsseitig gebildete NONCE-Wert (N') und ein in dem Empfangsnetzwerkknoten (2-2) gespeicherter Schlüssel (K) zur Entschlüsselung der in der Nachricht (F) verschlüsselt übertragenen Daten benutzt werden.

11. Verfahren nach einem der vorangehenden Ansprüche 2-8, wobei die Nachricht (F) über eine Funkschnittstelle von dem Sendenetzwerkknoten (2-1) zu dem Empfangsnetzwerkknoten (2-2) übertragen wird.

12. Netzwerk (1) bestehend aus mehreren Netzwerkknoten (2), die untereinander Daten in Nachrichten (F) übertragen, wobei jeder Netzwerkknoten (2) aufweist:
a) eine Einheit (7) zum Bilden eines NONCE-Wertes (N), aus einem Zählwert (CTR), welcher bei der Übertragung einer Nachricht (F) aktualisiert wird, und aus einem Konstantwert (EANCV), welcher von einem zentralen Management-Netzwerkknoten (2-0) den übrigen Netzwerkknoten (2-i) des Netzwerkes (1) gemeinsam zur Verfügung gestellt wird; und
b) eine Einheit (5) zur Ver- und Entschlüsselung der in der Nachricht (F) übertragenen Daten mittels eines kryptographischen Schlüssels (K) und des gebildeten NONCE-Wertes (N).

13. Netzwerk nach Anspruch 12,
wobei die Netzwerkknoten (2) jeweils mindestens einen Sensor (3) aufweisen.

14. Computerprogramm mit Programmbefehlen zur Durchführung des Verfahrens nach Ansprüchen 1-11.

15. Datenträger, der das Computerprogramm nach Anspruch 14 speichert.

## Claims

1. Method for the cryptographically protected transmission of data between network nodes (2) of a network (1), wherein the data in a message (F) are transmitted by carrying out the following steps:
a) forming a NONCE value (N), from a count value (CTR), which is updated when the message (F) is transmitted, and from a constant value (EANCV), which is made available by a central management network node (2-0) to the remaining network nodes (2-i) of the network (1) jointly; and
b) encrypting and decrypting the data transmitted in the message (F) by means of a cryptographic key (K) and the NONCE value (N) formed.

2. Method according to Claim 1,
wherein the NONCE value (N) is additionally formed on the basis of a transmission node address (SA) of that transmission network node (2-1) that transmits the message (F) to another reception network node (2-2) of the network (1).

3. Method according to Claim 1, wherein the shared constant value (EANCV) is transmitted to the network nodes (2-i) of the network (1) by the central management network node (2-0) by sending a broadcast message or by sending unicast messages.

4. Method according to Claim 1 or 3,
wherein the shared constant value (EANCV) is reconfigurable by the central management node (2-0).

5. Method according to Claim 4,
wherein the shared constant value (EANCV) is reconfigured at fixed intervals of time, after a prescribed transmitted volume of data has been exceeded, after a prescribed number of transmitted messages (F) has been exceeded, after a prescribed count value has been reached at one of the network nodes (2-i) of the network (1), when a prescribed event occurs or when data that satisfy a prescribed condition are transmitted.

6. Method according to Claim 2,
wherein the NONCE value (N) is formed by concatenating the transmission node address (SA) of the sending network node (2-1), the shared constant value (EANCV) and the count value (CTR) that is produced by an internal counter (8) of the transmission network node (2-1).

7. Method according to Claim 2,
wherein the NONCE value (N) is formed by a hash function of the concatenation of the transmission node address (SA) of the transmission network node (2-1), of the shared constant value (EANCV) and of the count value (CTR) that is produced by an internal counter (8) of the transmission network node (2-1).

8. Method according to one of the preceding Claims 1-7,
wherein the data transmitted in the message are encrypted and decrypted by a CCM algorithm.

9. Method according to one of Claims 2-8,
wherein the transmitted message (F) comprises header data (HDR), which have a transmission node address (SA), a reception node address (EA) and the current count value (CTR) from the transmission network node (2-1), and
user data (PL), which have the encrypted data.

10. Method according to Claim 9,
wherein the reception network node (2-2) compares the count value (CTR) from the transmission network node (2-1), which count value is transmitted in the message (F), with a count value (CTR') from an internal counter (14) of the reception network node (2-2), which count value is selected on the basis of the transmission node address (SA) transmitted in the message (F), and forms a reception-end NONCE value (N') from the transmitted count value (CTR), from the shared constant value (EANCV) and from the transmitted transmission node address (SA) if the transmitted count value (CTR) is more current than the selected count value (CTR'),
wherein the NONCE value (N') formed at the reception end and a key (K) stored in the reception network node (2-2) are used to decrypt the data transmitted in encrypted form in the message (F).

11. Method according to one of the preceding Claims 2-8, wherein the message (F) is transmitted from the transmission network node (2-1) to the reception network node (2-2) via a radio interface.

12. Network (1) consisting of multiple network nodes (2) that transmit data among one another in messages (F), wherein each network node (2) has:
a) a unit (7) for forming a NONCE value (N), from a count value (CTR), which is updated when a message (F) is transmitted, and from a constant value (EANCV), which is made available by a central management network node (2-0) to the remaining network nodes (2-i) of the network (1) jointly; and
b) a unit (5) for encrypting and decrypting the data transmitted in the message (F) by means of a cryptographic key (K) and the NONCE value (N) formed.

13. Network according to Claim 12,
wherein the network nodes (2) each have at least one sensor (3).

14. Computer program having program commands for performing the method according to Claims 1-11.

15. Data storage medium that stores the computer program according to Claim 14.

## Revendications

1. Procédé pour la transmission protégée par cryptographie de données entre des noeuds de réseau (2) d'un réseau (1), dans lequel, pour la transmission des données dans un message (F), on exécute les étapes suivantes:
a) formation d'une valeur de nonce (N), à partir d'une valeur de comptage (CTR), qui est actualisée lors de la transmission du message (F), et d'une valeur constante (EANCV), qui est mise en commun à la disposition des autres noeuds de réseau (2-i) du réseau (1) par un noeud de réseau de gestion central (2-0); et
b) codage et décodage des données transmises dans le message (F) au moyen d'une clé cryptographique (K) et de la valeur de nonce formée (N).

2. Procédé selon la revendication 1, dans lequel on forme la valeur de nonce (N) en plus en fonction d'une adresse de noeud d'émission (SA) du noeud de réseau d'émission (2-1) qui transmet le message (F) à un autre noeud de réseau de réception (2-2) du réseau (1).

3. Procédé selon la revendication 1, dans lequel on transmet la valeur constante commune (EANCV) du noeud de réseau de gestion central (2-0) aux noeuds de réseau (2-i) du réseau (1) par émission d'un message en multidiffusion ou par émission de messages en unidiffusion.

4. Procédé selon la revendication 1 ou 3, dans lequel la valeur constante commune (EANCV) peut être reconfigurée par le noeud de gestion central (2-0).

5. Procédé selon la revendication 4, dans lequel on effectue une reconfiguration de la valeur constante commune (EANCV) à des intervalles de temps fixes, après dépassement d'une quantité de données transmises prédéterminée, après dépassement d'un nombre prédéterminé de messages transmis (F), après atteinte d'une valeur de comptage prédéterminée à l'un des noeuds de réseau (2-i) du réseau (1), à la survenance d'un événement prédéterminé ou lors d'une transmission de données, qui remplissent une condition prédéterminée.

6. Procédé selon la revendication 2, dans lequel on forme la valeur de nonce (N) par concaténation de l'adresse de noeud d'émission (SA) du noeud de réseau émetteur (2-1), de la valeur constante commune (EANCV) et de la valeur de comptage (CTR) qui est produite par un compteur interne (8) du noeud de réseau d'émission (2-1).

7. Procédé selon la revendication 2, dans lequel on forme la valeur de nonce (N) par une fonction de hachage de la concaténation de l'adresse de noeud d'émission (SA) du noeud de réseau d'émission (2-1), de la valeur constante commune (EANCV) et de la valeur de comptage (CTR) qui est produite par un compteur interne (8) du noeud de réseau d'émission (1-2).

8. Procédé selon l'une quelconque des revendications précédentes 1 à 7, dans lequel on effectue le codage et le décodage des données transmises dans le message au moyen d'un algorithme CCM.

9. Procédé selon l'une quelconque des revendications 2 à 8, dans lequel le message transmis (F) comprend des données d'entête (HDR) qui présentent une adresse de noeud d'émission (SA), une adresse de noeud de réception (EA) et la valeur de comptage actuelle (CTR) du noeud de réseau d'émission (2-1), et des données utiles (PL)qui présentent les données codées.

10. Procédé selon la revendication 9, dans lequel le noeud de réseau de réception (2-2) compare la valeur de comptage (CTR) du noeud de réseau d'émission (2-1) transmise dans le message (F) avec une valeur de comptage (CTR') d'un compteur interne (14) du noeud de réseau de réception (2-2) sélectionnée à l'aide de l'adresse de noeud d'émission (SA) transmise dans le message (F), et forme une valeur de nonce côté réception (N') à partir de la valeur de comptage transmise (CTR), de la valeur constante commune (EANCV) et de l'adresse de noeud d'émission transmise (SA), dans le cas où la valeur de comptage transmise (CTR) est plus actuelle que la valeur de comptage sélectionnée (CTR'), dans lequel on utilise la valeur de nonce formée côté réception (N') et une clé (K) mémorisée dans le noeud de réseau de réception (2-2) pour le décodage des données transmises sous forme codée dans le message (F).

11. Procédé selon l'une quelconque des revendications précédentes 2 à 8, dans lequel on transmet le message (F) du noeud de réseau d'émission (2-1) au noeud de réseau de réception (2-2) par l'intermédiaire d'une interface radio.

12. Réseau (1) se composant de plusieurs noeuds de réseau (2) qui transmettent entre eux des données dans des messages (F) dans lequel chaque noeud de réseau (2) présente:
a) une unité (7) destinée à former une valeur de nonce (N), à partir d'une valeur de comptage (CTR), qui est actualisée lors de la transmission d'un message (F), et d'une valeur constante (EANCV), qui est mise en commun à la disposition des autres noeuds de réseau (2-i) du réseau (1) par un noeud de réseau de gestion central (2-0); et
b) une unité (5) destinée à coder et à décoder les données transmises dans le message (F) au moyen d'une clé cryptographique (K) et de la valeur de nonce formée (N).

13. Réseau selon la revendication 12, dans lequel les noeuds de réseau (2) présentent respectivement au moins un détecteur (3).

14. Programme informatique avec des instructions de programme destiné à l'exécution du procédé selon les revendications 1 à 11.

15. Support de données, qui mémorise le programme informatique selon la revendication 14.
